# EUROPEAN PATENT APPLICATION

(11) **EP 4 644 962 A1**
(43) Date of publication of application: **05.11.2025**
(21) Application number: 25172727.7
(22) Date of filing: 25.04.2025
(51) Int. Cl.: G02B 6/44

(54) **FIBER OPTIC CABLE CLAMP**

(30) Priority: 30.04.2024 US 202463640358 P
(71) Applicant: CORNING RESEARCH & DEVELOPMENT CORPORATION, Corning NY 14831 (US)
(72) Inventor: DESARD, Christophe, 44410 Herbignac (FR); NAUDIN, Thierry, 44700 Orvault (FR); VAN DER VELDE, Martijn Nisse, 44260 Savenay (FR)
(74) Representative: Elkington and Fife LLP

(57) **Abstract**

A clamp (100) for holding a fiber optic cable (150) in a fiber optic apparatus (200) and a fiber optic enclosure (200) with the clamp (100) are disclosed. The clamp (100) comprises an insert (110) configured to be inserted into an opening (160) in the fiber optic apparatus (200). The clamp (100) further comprises a clamping element (130) configured to be threadedly engaged with the insert (110). The clamping element (130) is configured to engage with a reinforcing member (154, 156, 158) of the fiber optic cable (150) to hold the fiber optic cable (150) in place.

## Description

### PRIORITY APPLICATIONS

This application claims the benefit of priority of U.S. Provisional Application Serial No. 63/640,358 filed on April 30, 2024, the content of which is relied upon and incorporated herein by reference in its entirety.

### BACKGROUND

This disclosure relates to the field of apparatuses for fiber optic networks. In particular, the technology of the disclosure relates to fiber optic enclosures and clamps for fiber optic cables.

Fiber optic networks allow information to be transmitted via optical signals transmitted through special glass cables known as optical fibers. Compared with traditional copper wiring, optical fibers allow transmission over greater distances with substantially less signal loss, provide a greater bandwidth, and do not suffer from electrical interference. Fiber optic networks are particularly useful when providing long-distance communication and high bandwidth, so called "super-fast," broadband internet.

To maximise the benefits of fiber optic networks, optical fibers are preferably used for as much of the network as possible. In particular, many network operators are increasingly deploying fiber to the home (FTTH) networks. There is a constant and rapid development of FTTH markets worldwide, in particular in the years since the COVID-19 pandemic increasing the prevalence of home working around the world. There is a broad market need for FTTH networks, of which fiber optic enclosures (e.g., wall terminals) installed in flats and houses are a crucial part. Fiber optic outlets are widely used in the fiber to the 'X' (FTTX) part of the network and are installed directly in the end customer location. In some sites, wall outlets can be integrated with other structural elements directly in the walls. However, for other sites, fiber optic outlets often need to be applied externally. As well as at the end customer location, fiber optic enclosures may be needed upstream at various points of the fiber optic network and they may be installed in a variety of different types of location.

Optical fibers are fragile and fiber optic cables are subjected to mechanical strain, both during installation and during use. This is a major consideration when planning fiber optic networks and when constructing the cables themselves. In particular, in view of the fragility of the fibers, the tensile strength of fiber optic cables is of great importance and must be such that the optical fibers can be anchored in a manner free from tensile strain. For this purpose, cables have been developed in which a reinforcing member is present to provide the required tensile strength to the cable. In some cables, the optical fibers are grouped around a tension-proof central element, which can be a rod made from one of a polymer, a metal or glass fibers. In other cables, the reinforcing member is made up of two or more rods which are distributed circumferentially around the cable. Alternatively, or in addition, in some cables the optical fibers are circumscribed by a layer of tension-proof fibres, preferably aramid fibres, which are light and provide high pull-out resistance. Fiber optic cables are generally covered by a cable sheath. The cable sheath can be constructed in layers and have, for example, an inner sheath, a grooved or corrugated steel sheath and an outer sheath.

The tensile strength which is provided by the construction of the fiber optic cables must ensure that straining of the optical fibers is prevented not only at locations along the cable but also at locations at which cables meet and are connected. Cables generally meet and are connected in fiber optic enclosures which comprise a number of fiber optic components, such as connections and splices which must be kept safe and secure within the fiber optic enclosure in a variety of different locations.

Once cables enter a fiber optic enclosure, the cables must be fixed with respect to the enclosure to prevent the cables being pulled out and to protect the cables from tensile forces. In order to do this effectively, the cable reinforcing members are generally anchored to the enclosure. There are a number of solutions for doing this, including self-tapping screws, combinations of nuts and metric screws or doghouse nuts. However, a major drawback of these existing solutions is that they are not modular. In other words, fiber optic enclosures are manufactured with one solution in mind and the end user is then constrained to this solution for fixing the fiber optic cables in the fiber optic closure. Furthermore, existing solutions often do not provide adequate anchoring for the cable reinforcing members and can also lead to the cable reinforcing members becoming damaged.

Embodiments of the present invention may address one or more of these problems, amongst others.

### SUMMARY

According to a first aspect, a clamp for holding a fiber optic cable in a fiber optic apparatus is provided. The clamp comprises an insert configured to be inserted into an opening in the fiber optic apparatus. The clamp further comprises a clamping element configured to be threadedly engaged with the insert. The clamping element is configured to engage with a reinforcing member of the fiber optic cable to hold the fiber optic cable in place.

Embodiments according to the first aspect may provide a modular clamping solution for fiber optic enclosures. In particular, a user is able to insert clamps based on the specific use case and their specific requirements. In more detail, depending on the type of cable, a user can insert different types of inserts. This facilitates manufacturing of fiber optic enclosures as they can be formed as a one size fits all component, with only the inserts of the clamps needing to be changed depending on the use case. This may also allow for enclosures to be manufactured more cheaply as fewer molds are required for the enclosures.

Optionally, the clamp further comprises a guide configured to guide the reinforcing member of the fiber optic cable into the clamp during clamping.

Providing a guide configured to guide the reinforcing member of the fiber optic cable into the clamp during clamping can allow a user to more accurately and repeatedly clamp one or more reinforcing members of the fiber optic cable in the clamp. This can reduce the time required to clamp fiber optic cables in a fiber optic apparatus such as a fiber optic enclosure. Reinforcing members of fiber optic cables have a tendency to move during clamping. Such a guide can help to mitigate against this movement by constraining the reinforcing member during clamping.

Optionally, the insert is configured to substantially fill the opening in the fiber optic apparatus.

This can ensure a good fit between the insert and the fiber optic apparatus when the insert is inserted into the opening. Furthermore, once an insert is inserted in the fiber optic apparatus, this can prevent the ingress of debris or moisture into the fiber optic apparatus.

Optionally, the insert comprises a threaded shaft. Optionally, the clamping element is configured to be threadedly engaged with the threaded shaft.

Providing an insert with a threaded shaft allows a clamp to be provided which has a female thread.

Optionally, the clamping element is a nut.

Nuts are low cost and readily available off-the-shelf components. Using a nut can mean that the clamping element does not need to be manufactured specifically for this purpose. Therefore, providing the clamping element as a nut can allow for the cost of the clamping element to be minimized.

Optionally, the clamp further comprises a toothed washer at the base of the threaded shaft that is configured to provide mechanical anchoring to the reinforcing member of the cable when clamped.

Providing a toothed washer at the base of the threaded shaft can improve anchoring and provide more of the fiber optic cable reinforcing member when the clamping element is tightened. In more detail the teeth of the toothed washer may engage with the reinforcing member of the cable to prevent any movement of the reinforcing member during tightening of the clamping element. In embodiments in which the reinforcing member is a mesh, the toothed washer may prevent the mesh being tangled during tightening of the clamping element.

Optionally, the top of the threaded shaft is punched to prevent removal of the nut from the shaft.

Punching the threaded shaft may prevent the clamping element from being removed from the shaft. A solution is therefore provided where the clamping element cannot be unintentionally removed and lost. This in turn avoids the need to replace components of the clamp.

Optionally, the guide is a hole in the threaded shaft.

The guide being a hole in the threaded shaft may allow the reinforcing member of a fiber optic cable to be fed through the shaft and clamped when the clamping element is tightened. This can provide an easy and repeatable means for guiding and clamping a reinforcing member of a fiber optic cable. Providing a guide in the form of a hole limits movement of the reinforcing member during tightening of the clamp and therefore reduces the risk of inadequate clamping. The hole may be used to guide fiber optic cable reinforcing members where these are in the form of one or more rods made from one of a polymer, a metal or glass fibers.

Optionally, the guide is a first guide and optionally the clamp further comprises a second guide.

The second guide may provide even further accuracy and repeatability when clamping one or more reinforcing members of the fiber optic cable in the clamp. The provision of a second guide can further reduce the time required to clamp fiber optic cables in a fiber optic apparatus such as a fiber optic enclosure. Reinforcing members of fiber optic cables have a tendency to move during clamping. Such a second guide can further help to mitigate against this movement by constraining the reinforcing member during clamping.

Optionally, the second guide comprises one or more elongate protrusions on the insert.

Having a second guide comprising one or more elongate protrusions provides a solution which is easy to manufacture. In particular, the one or more elongate protrusions can be molded integrally or machined into with the insert.

Optionally, the insert is a metal insert.

Optionally, the insert comprises a hole configured to receive the clamping element.

Such an arrangement may allow a clamping element to be provided which has a male thread.

Optionally, the clamping element is a screw.

The screws may be low cost and readily available off-the-shelf components. This means that the clamping element may not need to be manufactured specifically for this purpose. Therefore, providing the clamping element as a screw can allow for the cost of the clamping element to be minimized.

Optionally, the clamping element is a self-tapping screw.

Providing the clamping element as a self-tapping screw may reduce the manufacturing requirements of the insert as the hole of the insert does not need to be pre-tapped and can be provided simply as a guide hole for the screw.

Optionally, the guide comprises one or more elongate protrusions on the insert.

Having a guide comprising one or more elongate protrusions provides a solution which may be easy to manufacture. In particular, the one or more elongate protrusions can be molded integrally or machined into with the insert.

Optionally, the insert is a plastic insert.

Providing the insert as a plastic insert may reduce the costs associated with manufacturing the insert as the insert can be manufactured cheaply and in high quantities from low cost materials. Furthermore, in embodiments where the screw is a self-tapping screw, the screw can be easily threaded into the plastic insert.

Optionally, the clamp further comprises a stopper configured to abut the cable reinforcing member.

The provision of a stopper may prevent the reinforcing member from protruding too far into the fiber optic apparatus. This can prevent the reinforcing member from interfering with other components housed in the fiber optic apparatus such as optical fiber connections.

Optionally, the stopper is a wall.

Providing the stopper as a wall provides a solution which may be easy to manufacture. In particular, the stopper can be molded integrally or machined into the clamp of the fiber optic apparatus. Furthermore, the size and height of the stopper can be easily configured depending on the type of reinforcing member that is being clamped.

Optionally, the stopper comprises at least one edge configured to deflect optical fibers away from the clamping element.

This can prevent the optical fibers from inadvertently becoming damaged during clamping. For example, it can divert the optical fibers away from the clamp to prevent the cables being caught under the clamping element during clamping of the fiber optic cable reinforcing member.

Optionally, the insert is removable from the fiber-optic apparatus.

This can provide a modular clamping solution for a fiber optic apparatus. In particular, the insert can be easily replaced with a new insert in the case of the insert becoming damaged or breaking. Furthermore, a user is able to remove inserts after use and replace them with different types of inserts depending on the intended use of the fiber optic apparatus and the type of fiber optic cable being clamped. This can prevent the need for replacing an entire fiber optic apparatus as a user can simply exchange the insert(s) being used.

Optionally, the insert is fixed within the fiber optic apparatus.

The clamping element may therefore provide more secure clamping of a fiber optic cable in a fiber optic apparatus as the risk of an insert being dislodged or inadvertently removed is reduced or eliminated completely.

Optionally, the insert is fixed within the fiber-optic apparatus by overmolding, or by cold insertion, or by hot insertion or by ultrasonic insertion.

The above techniques may provide secure fixation which further reduce the risk of the insert being inadvertently removed from the fiber optic apparatus.

According to a second aspect, a fiber optic enclosure is provided, the fiber optic enclosure comprising a clamp according to the first aspect.

Additional features and advantages will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The embodiments of the disclosure will be described with respect to the Figures, in which:
Figure 1 illustrates a perspective view of a fiber optic cable clamp according to the first aspect;
Figure 2 illustrates an exploded view of a fiber optic cable clamp according to the first aspect;
Figure 3 illustrates a perspective view of a fiber optic cable clamp according to the second aspect;
Figure 4 illustrates an exploded view of a fiber optic cable clamp according to the second aspect;
Figures 5A, 5B and 5C illustrate fiber optic cable clamps according to the first aspect clamping different types of fiber optic cable reinforcing members.
Figure 6 illustrates a fiber optic enclosure with a fiber optic cable clamp according to the first aspect installed.

Like components across different figures are represented by like reference numerals.

### DETAILED DESCRIPTION

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

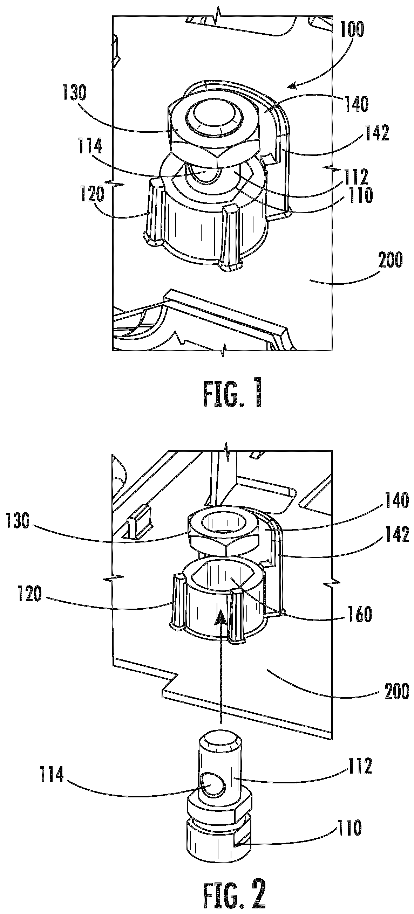

Figure 1 illustrates a perspective view of a fiber optic cable clamp 100 according to the first aspect. The clamp comprises an insert 110 with a threaded shaft 112. In this example embodiment, the threaded shaft 112 is formed integrally with the insert 110. In other embodiments, the threaded shaft 112 may be inserted into the insert 110 or threadedly engaged with the insert 110. The clamp further comprises a protrusion 120 in the fiber optic apparatus 200, the protrusion 120 being configured to receive the insert 110. Although the protrusion 120 helps to locate and fix the insert 110, the person skilled in the art will appreciate that the protrusion is optional. The insert is inserted into an opening 160 in the fiber optic apparatus 200. The insert 110 protrudes inwardly in the fiber optic apparatus 200. The insert further comprises a guide 114 in the form of a hole in the threaded shaft 112. The hole of the guide 114 is configured to receive a reinforcing member of a fiber optic cable which is intended to be inserted into the hole of the guide 114. The guide 114 in the form of a hole is particularly useful where the reinforcing member of the fiber optic cable is one or more rigid rods, as these can be easily inserted into the hole of the guide 114. Alternative or additional guides will be described in more detail in respect of fiber optic cable clamps according to the second aspect. These alternative or additional guides are equally applicable to fiber optic cable clamps according to the first aspect.

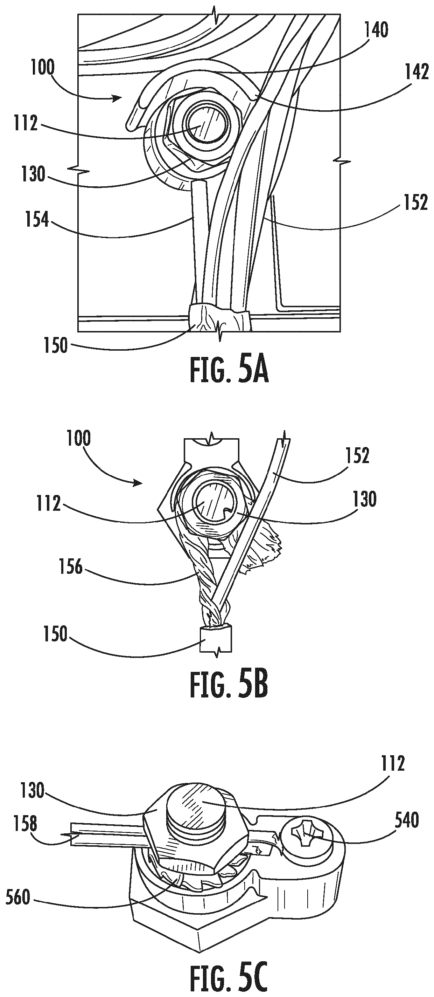

The fiber optic clamp 100 further comprises a clamping element in the form of a nut 130 which threadedly engages with the threaded shaft 112. The nut 130 can be tightened such that it engages with a reinforcing member of a fiber optic cable in order to clamp the reinforcing member in the fiber optic apparatus 200. Although in this example embodiment the clamping element is a nut 130, it will be appreciated that other forms of clamping element are envisaged which are in accordance with the first aspect. In more detail, the nut 130 can be replaced with any suitable clamping element having a female thread which can engage with the male thread of the threaded shaft. The clamp 100 also comprises a stopper configured to abut an end of the reinforcing member of the fiber optic cable to prevent the reinforcing member from protruding too far into the fiber optic apparatus. In this example embodiment, the stopper is in the form of a wall 140. However, the stopper may take other forms as will be described in more detail in respect of Figure 5C below. The clamp further comprises a deflecting member configured to deflect optical fibers away from the clamping element. In this embodiment, the stopper comprises the deflecting means in the form of an edge 142 of the wall. Once the reinforcing member of a fiber optic cable has been located and is ready to be clamped, the optical fibers can be diverted away from the clamping element by the deflecting means.

Figure 2 illustrates an exploded view of a fiber optic cable clamp 100 according to the first aspect. The fiber optic cable clamp 100 of Figure 2 shares the same features as the clamp of Figure 1. This Figure better illustrates how the insert 112 is inserted into an opening 160 in the fiber optic apparatus 200. In more detail, the insert is inserted into the opening 160 in the fiber optic apparatus 200 from the outside of the fiber optic apparatus. However, in alternative embodiments, the insert 112 may be inserted into the opening 160 in the fiber optic apparatus from the inside of the fiber optic apparatus as long as the clamp protrudes inwardly into the fiber optic apparatus. The present application is not limited in relation to the aspect of Figures 1 and 2 of the fiber optic cable clamp 100, and other embodiments will be apparent to the person skilled in the art.

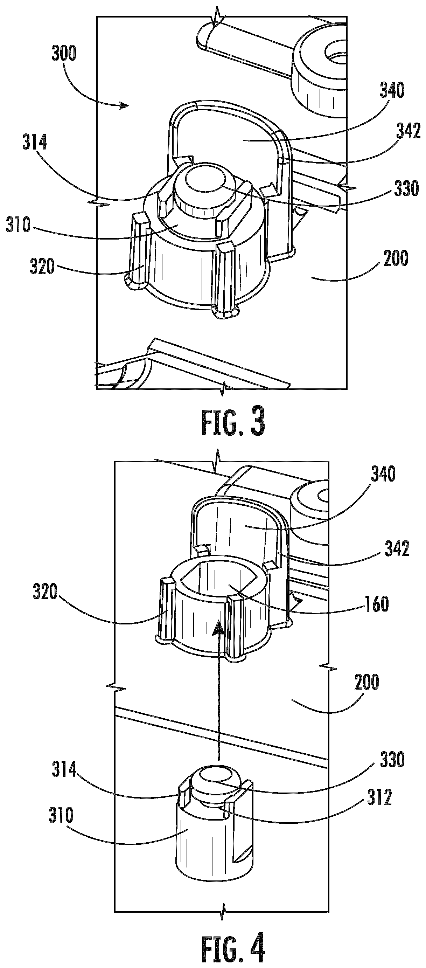

Figure 3 illustrates a perspective view of a fiber optic cable clamp 100 according to the second. The clamp comprises an insert 310 with a hole 312 configured to receive a clamping element. In this embodiment, the clamping element is a screw 330. As in the first aspect of Figures 1 and 2, the clamp further comprises a protrusion 320 in the fiber optic apparatus 200, the protrusion 320 being configured to receive the insert 310. Although the protrusion 320 helps to locate and fix the insert 310, the person skilled in the art will appreciate that the protrusion is optional. The insert is inserted into an opening 360 in the fiber optic apparatus 200. The insert 310 protrudes inwardly in the fiber optic apparatus 200. The insert further comprises a guide in the form of two elongate protrusions 314 that may be located adjacent to the clamping element 330. The two elongate protrusions 314 are configured to guide one or more reinforcing members of a fiber optic cable. In particular, the two elongate protrusions are configured to keep the reinforcing member close to the clamping element 330 during clamping. In more detail, the two guides may constrain outward movement of the reinforcing member during clamping. Although the described embodiment of the clamp has two elongate protrusions 314, it will be appreciated that the clamp may comprise only one elongate protrusion or more than two elongate protrusions depending on the intended use of the clamp.

The screw 330 is configured to threadedly engage with the hole 312 in the insert. The screw can be configured as a self-tapping screw or alternatively, the hole 312 may be threaded. The screw 330 can be tightened such that the head of the screw 330 engages with a reinforcing member of a fiber optic cable in order to clamp the reinforcing member in the fiber optic apparatus 200. Although in this example embodiment the clamping element is a screw 330, it will be appreciated that other forms of clamping element are envisaged which are in accordance with the first aspect. In more detail, the screw 330 can be replaced with any suitable clamping element which can be inserted into a hole in the insert 310. The clamp 300 also comprises a stopper as described in relation to the embodiment of Figures 1 and 2.

Figure 4 illustrates an exploded view of a fiber optic cable clamp 300 according to the second aspect. The fiber optic cable clamp 300 of Figure 4 shares the same features as the clamp of Figure 3. This Figure better illustrates how the insert 312 is inserted into an opening 160 in the fiber optic apparatus 200. In more detail, the insert is inserted into the opening 160 in the fiber optic apparatus 200 from the outside of the fiber optic apparatus. However, in alternative embodiments, the insert 312 may be inserted into the opening 160 in the fiber optic apparatus from the inside of the fiber optic apparatus as long as the clamp protrudes inwardly into the fiber optic apparatus. The present application is not limited in relation to the aspect of Figures 3 and 4 of the fiber optic cable clamp 130, and other embodiments will be apparent to the person skilled in the art.

Figures 5A, 5B, and 5C illustrate fiber optic cable clamps 100 according to the first aspect clamping different types of fiber optic cable reinforcing members.

The exemplary embodiment of Figure 5A shares all of the features of the clamp 100 of Figure 1, and shows the clamp in use. As can be seen in this figure, a fiber optic cable 150 is proximate the clamp 100 and the reinforcing member in the form of a central rigid rod 154 is inserted into a hole 114 of the threaded shaft and clamped by the nut 130. The optical fibers themselves are diverted by the deflecting member 142 which is in the form of an edge 142 of a wall 140.

In the exemplary embodiment of Figure 5B, the reinforcing member, in the form of an aramid mesh 156, is clamped around the periphery of the threaded shaft 112 by the nut 130. In this embodiment, there is no deflecting member.

In the exemplary embodiment of Figure 5C, the reinforcing member, in the form of two rigid rods 158 which are diametrically opposed in a fiber optic cable, are inserted into the hole 114 clamped by the nut 130. In this embodiment, the stopper is in the form of a screw. The screw is screwed directly into the clamp. This embodiment also comprises a toothed washer 560 which is located between the protrusion 120 in the fiber optic apparatus 200 and the nut 130. The toothed washer engages with the two rigid rods 158 to prevent movement of the rods during clamping. It will be appreciated that the toothed washer may also be applied to the embodiments of Figures 5A and 5B in which the reinforcing members are a central rigid rod and an aramid mesh respectively.

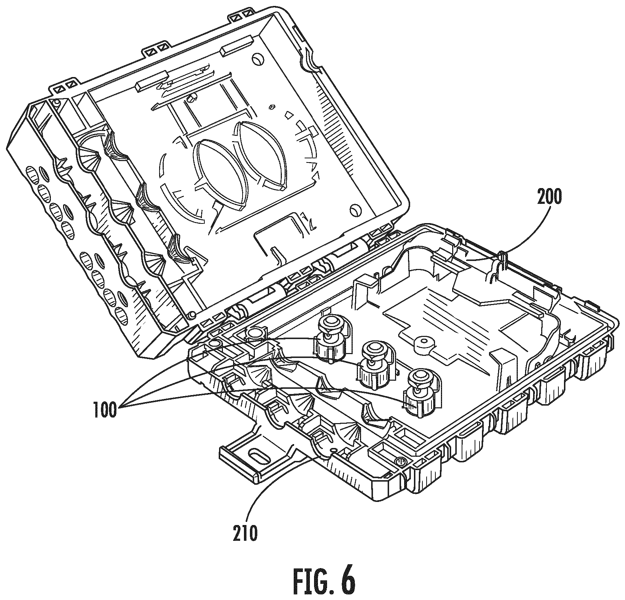

Figure 6 illustrates a fiber optic enclosure 200 with a fiber optic cable clamp 100 according to the first aspect installed. Fiber optic cables enter the fiber optic enclosure through opening 210 in the enclosure. The outer sheath of the cable is then stripped bac so that the reinforcing member of the cable can be clamped as described above in clamp 100.

As used herein, the terms "fiber-optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

It is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Particular aspects of the invention are set out in the following numbered clauses:
Clause 1. A clamp for holding a fiber optic cable in a fiber optic apparatus, the clamp comprising:
   an insert configured to be inserted into an opening in the fiber optic apparatus;
   a clamping element configured to be threadedly engaged with the insert;
   wherein the clamping element is configured to engage with a reinforcing member of the fiber optic cable to hold the fiber optic cable in place.
Clause 2. The clamp of clause 1, further comprising a guide configured to guide the reinforcing member of the fiber optic cable into the clamp during clamping.
Clause 3. The clamp of clause 1 or clause 2, wherein the insert is configured to substantially fill the opening in the fiber-optic apparatus.
Clause 4. The clamp of any preceding clause, wherein the insert comprises a threaded shaft; and
   wherein the clamping element is configured to be threadedly engaged with the threaded shaft.
Clause 5. The clamp of any preceding clause, wherein the clamping element is a nut.
Clause 6. The clamp of clause 4 or clause 5, further comprising a toothed washer at the base of the threaded shaft and configured to provide mechanical anchoring to the reinforcing member of the cable when clamped.
Clause 7. The clamp of clause 5 or clause 6, wherein the top of the threaded shaft is punched to prevent removal of the nut from the shaft.
Clause 8. The clamp of any one of clauses 4 to 7, wherein the guide is a hole in the threaded shaft.
Clause 9. The clamp of clause 8, wherein the guide is a first guide and wherein the clamp further comprises a second guide.
Clause 10. The clamp of clause 9, wherein the second guide comprises one or more elongate protrusions on the insert.
Clause 11. The clamp of any one of clauses 4 to 10, wherein the insert is a metal insert.
Clause 12. The clamp of any one of clauses 1 to 3, wherein the insert comprises a hole configured to receive the clamping element.
Clause 13. The clamp of clause 12, wherein the clamping element is a screw.
Clause 14. The clamp of clause 13, wherein the clamping element is a self-tapping screw.
15. The clamp of any one of clauses 12 to 14, wherein the guide comprises one or more elongate protrusions on the insert.
Clause 16. The clamp of any one of clauses 12 to 15, wherein the insert is a plastic insert.
Clause 17. The clamp of clause any preceding clause, wherein the clamp further comprises a stopper configured to abut the cable reinforcing member.
Clause 18. The clamp of clause 17, wherein the stopper is a wall.
Clause 19. The clamp of clause 18, wherein the stopper comprises at least one edge configured to deflect optical fibers away from the clamping element.
Clause 20. The clamp of any preceding clause, wherein the insert is removable from the fiber-optic apparatus.
Clause 21. The clamp of any one of clauses 1 to 19, wherein the insert is fixed within the fiber-optic apparatus.
Clause 22. The clamp of clause 21, wherein the insert is fixed within the fiber-optic apparatus by overmolding, or by cold insertion, or by hot insertion or by ultrasonic insertion.
Clause 23. A fiber-optic enclosure comprising a clamp according to any one of clauses 1 to 22.

## Claims

1. A clamp for holding a fiber optic cable in a fiber optic apparatus, the clamp comprising:
an insert configured to be inserted into an opening in the fiber optic apparatus;
a clamping element configured to be threadedly engaged with the insert;
wherein the clamping element is configured to engage with a reinforcing member of the fiber optic cable to hold the fiber optic cable in place.

2. The clamp of claim 1, further comprising a guide configured to guide the reinforcing member of the fiber optic cable into the clamp during clamping.

3. The clamp of claim 1 or claim 2, wherein the insert is configured to substantially fill the opening in the fiber-optic apparatus.

4. The clamp of any preceding claim, wherein the insert comprises a threaded shaft; and
wherein the clamping element is configured to be threadedly engaged with the threaded shaft.

5. The clamp of claim 4, further comprising a toothed washer at the base of the threaded shaft and configured to provide mechanical anchoring to the reinforcing member of the cable when clamped.

6. The clamp of any preceding claim, wherein the clamping element is a nut.

7. The clamp of claim 6, wherein the top of the threaded shaft is punched to prevent removal of the nut from the shaft.

8. The clamp of any of claims 4 to 7 wherein the clamp comprises a guide configured to guide the reinforcing member of the fiber optic cable into the clamp during clamping, and wherein the guide is a hole in the threaded shaft.

9. The clamp of claim 8, wherein the guide is a first guide and wherein the clamp further comprises a second guide.

10. The clamp of claim 9, wherein the second guide comprises one or more elongate protrusions on the insert.

11. The clamp of any preceding claim, wherein the insert is a metal insert.

12. The clamp of any claims 1-5, or 8-11, wherein the insert comprises a hole configured to receive the clamping element.

13. The clamp of claim 12, wherein the clamping element is a screw.

14. The clamp of claim 12 or claim 13, wherein the guide comprises one or more elongate protrusions on the insert.

15. The clamp of any of claims 12 to 14, wherein the insert is a plastic insert.
